# EUROPÄISCHE PATENTSCHRIFT

(11) **EP 3 152 487 B1**
(45) Veröffentlichungstag und Bekanntmachung des Hinweises auf die Patenterteilung: **18.11.2020**
(21) Anmeldenummer: 15724547.3
(22) Anmeldetag: 08.05.2015
(51) Int. Cl.: F22B 9/00, F22B 35/00, F01K 25/02, F22B 3/00, F01K 25/08

(54) **ANORDNUNG MIT MEHREREN WÄRMEÜBERTRAGERN UND VERFAHREN ZUM VERDAMPFEN EINES ARBEITSMEDIUMS**
ANORDNUNG MIT MEHREREN WÄRMEÜBERTRAGERN UND VERFAHREN ZUM VERDAMPFEN EINES ARBEITSMEDIUMS
ENSEMBLE DE PLUSIEURS ÉCHANGEURS DE CHALEUR ET PROCÉDÉ D'ÉVAPORATION D'UN FLUIDE DE TRAVAIL

(30) Priorität: 09.05.2014 DE 102014006909
(43) Veröffentlichungstag der Anmeldung: 12.04.2017
(73) Patentinhaber: Maschinenwerk Misselhorn MWM GmbH, 80992 München (DE)
(72) Erfinder: WIELAND, Christoph, 80469 München (DE); GLEINSER, Moritz, 81379 München (DE); SPLIETHOFF, Hartmut, 82140 Olching (DE); MOULLION, Manfred, 81247 München (DE)
(74) Vertreter: Henkel & Partner mbB
(86) Internationale Anmeldenummer: PCT/EP2015/060262
(87) Internationale Veröffentlichungsnummer: WO 2015/169965

(56) Entgegenhaltungen:
- US-A1- 2003 136 130
- US-A1- 2012 111 003
- US-A1- 2014 075 962

## Beschreibung

Die Erfindung betrifft eine Anordnung mit mehreren Wärmeübertragern zum Verdampfen eines Arbeitsmediums durch Wärmeübertragung von einem Wärmequellenmedium sowie ein Verfahren zum Verdampfen eines Arbeitsmediums durch Wärmeübertragung von einem Wärmequellenmedium in einer solchen Anordnung. Diese Anordnung und das Verfahren sind besonders vorteilhaft in Verbindung mit einer Anlage und einem Verfahren zur Rückgewinnung von Energie aus Wärme in einem thermodynamischen Kreisprozess einsetzbar, in dem die Abwärme als das Wärmequellenmedium verwendet wird.

Thermodynamische Kreisprozesse zur Umwandlung von extern zugeführter Wärmeenergie in mechanische Arbeit sind beispielsweise in Form des klassischen Dampfmaschinenkreislaufes, des Stirling-Kreisprozesses, des Clausius-Rankine-Kreisprozesses oder des organischen Rankine-Kreisprozesses ("Organic-Rankine-Cycle" bzw. ORC-Prozess) bekannt. Bei dem ORC-Prozess wird - anders als bei einem klassischen Dampfmaschinenkreislauf - an Stelle von Wasser ein bei niedrigen Temperaturen siedender, organischer Stoff als Arbeitsmedium zwischen einem als Verdampfer eingesetzten Wärmeübertrager, in dem das zunächst flüssige Arbeitsmedium durch die extern zugeführte Wärme verdampft wird, einer Turbine, in der das dampfförmige Arbeitsmedium unter Auskoppelung von mechanischer Arbeit entspannt wird, und einem Kondensator, in dem das Arbeitsmedium zurückgekühlt und wieder verflüssigt wird, kontinuierlich zirkuliert. Mit dem ORC-Prozess wird versucht, durch Auswahl eines geeigneten Arbeitsmediums und durch Optimierung der Prozessparameter Druck und Temperatur auch kleine Quellen thermischer Energie wirtschaftlich in mechanische Arbeit bzw. elektrische Energie zu wandeln. Allerdings ist für den wirtschaftlichen Betrieb eines ORC-Prozesses ein Temperaturniveau von über 100° Celsius erforderlich, weil bei niedrigeren Prozesstemperaturen und einer geringen Temperaturspreizung zwischen Wärmequelle und Wärmesenke der Wirkungsgrad erheblich sinkt.

Die Nutzung von Wärmequellen mit einem Temperaturniveau unter 100° Celsius ist relativ unwirtschaftlich, aber zunehmend im ökologischen und, aufgrund der Verteuerung der Primärenergie in Form von fossilen Brennstoffen, auch im wirschaftlichen Interesse. Solche Wärme- oder Abwärmequellen mit relativ niedrigem Temperaturniveau stellen beispielsweise die Geothermie, thermische Solaranlagen, die Kühlkreisläufe stationärer und mobiler großer Verbrennungsmotoren oder Turbinen, die Abwärme der Energieerzeugung in allen Formen (z.B. in Blockheizkraftwerken bzw. BHKW-Anlagen), industrielle Prozeßwärme, oder Abwärme aus Biogasanlagen dar. Bisher bleibt die Abwärme, wenn sie nicht vor Ort zur Raumheizung oder Brauchwassererwärmung genutzt werden kann, vielfach ungenutzt und wird in die Umgebung abgegeben, weil ein Transport der Wärme über nennenswerte Distanzen oder eine Speicherung oder eine Wandlung und anderweitige Nutzung in Form von elektrischer oder mechanischer Energie bei diesem Temperaturniveau bislang nicht wirtschaftlich möglich ist.

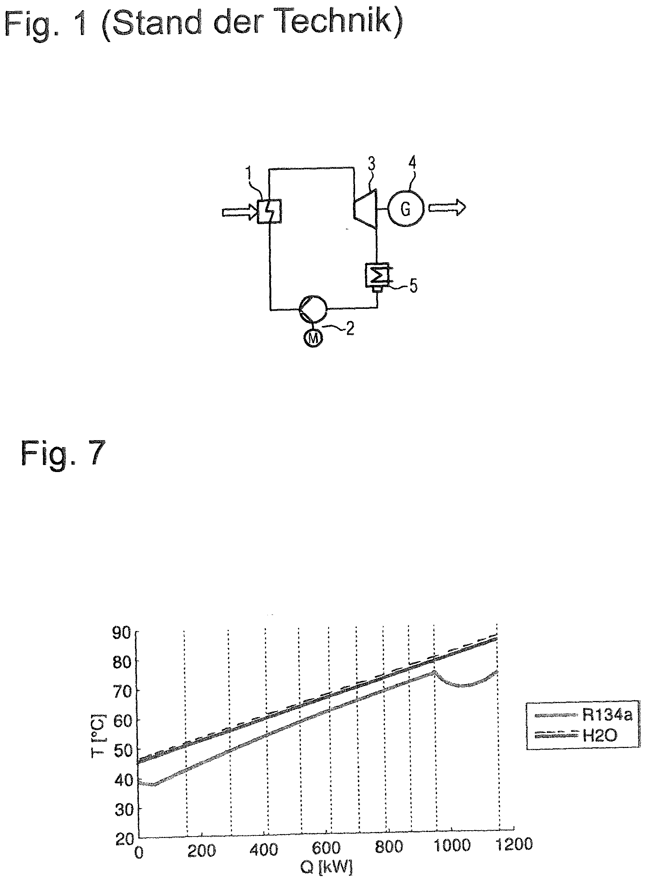

Die Figur 1 zeigt beispielhaft eine herkömmliche ORC-Anlage mit Direktverdampfung. Einem Wärmeübertrager 1, der als Wärmetauscher oder Verdampfer fungiert, wird Wärme von einer Wärmequelle zugeführt (durch den Pfeil angedeutet). In dem Verdampfer 1 wird einem durch eine Speisepumpe 2 zugeführten flüssigen Arbeitsmedium Wärme zugeführt und das Arbeitsmedium wird dadurch verdampft. Das dampfförmige Arbeitsmedium wird über eine Druckleitung einer Arbeitsmaschine (beispielsweise einer Turbine oder einer Kolbenmaschine) zugeleitet. In der Arbeitsmaschine wird das dampfförmige Arbeitsmedium entspannt, und die Arbeitsmaschine 3 treibt einen Generator 4 zur Gewinnung von elektrischer Energie an (durch den Pfeil angedeutet). Das entspannte dampfförmige Arbeitsmedium wird in einem Kondensator 5 kondensiert und das verflüssigte Arbeitsmedium wird über die Speisepumpe wieder dem Verdampfer 1 zugeführt.

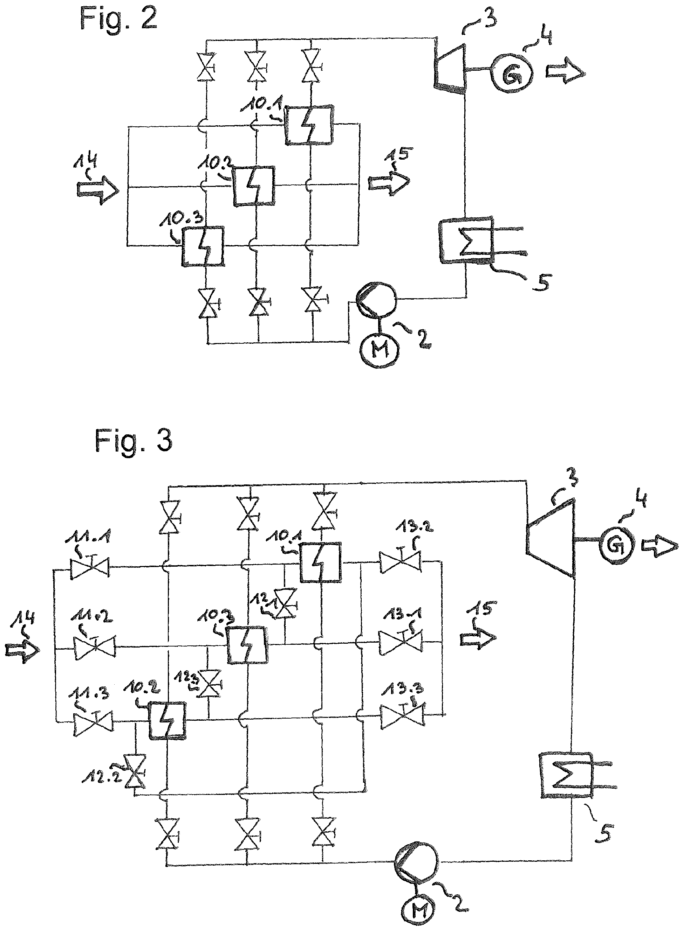

Aus der DE 102013009351 B3 ist eine Abwandlung des ORC-Prozesses bekannt, die im Folgenden als "Misselhorn"-Prozess bezeichnet wird und die als Grundlage für eine Anlage und ein Verfahren zur Rückgewinnung von Energie aus Wärme in einem thermodynamischen Kreisprozess dient, mit der bzw. dem die Nutzung von Wärmequellen mit angemessenem Wirkungsgrad und unter wirtschaftlichen Bedingungen möglich ist, die ein Temperaturniveau von weniger als 100° Celsius haben. Bei dieser Anlage weist der Kreisprozess folgende miteinender kommunizierend verbundene Komponenten auf: einen Kondensator zum Rückkühlen und Verflüssigen eines Arbeitsmediums, eine stromab - bezogen auf die Strömungsrichtung des Arbeitsmediums - des Kondensators vorgesehene Verdampferanordnung zum Zuführen der Wärmeenergie zu dem Arbeitsmedium, um dessen Temperatur und Druck zu erhöhen, wobei die Verdampfer- oder Wärmeübertrageranordnung mindestens zwei voneinander unabhängige als Verdampfer arbeitende Wärmeübertragereinheiten aufweist, einen stromab der Wärmeübertrageranordnung vorgesehenen Arbeitsraum einer Arbeitsmaschine zum Entspannen von Arbeitsmedium aus der Wärmeübertrageranordnung, um dem Arbeitsmedium Energie zu entziehen, und eine Rückführung für das zumindest teilweise entspannte Arbeitsmedium zu dem Kondensator. Eine Pumpe für das Arbeitsmedium ist zwischen dem Kondensator und der Wärmeübertrageranordnung angeordnet. Stromauf und stromab der Wärmeübertragereinheiten ist eine Ventilanordnung vorgesehen, die so angesteuert werden kann, dass selektiv für jede Wärmeübertragereinheit in einer ersten Phase Arbeitsmedium in die Wärmeübertragereinheit einströmen kann, in einer zweiten Phase die Wärmeübertragereinheit von dem Kreisprozess vollständig getrennt ist, um das aufgenommene Arbeitsmedium zu erhitzen und dessen Druck zu erhöhen, und in einer dritten Phase das erhitzte bzw. verdampfte Arbeitsmedium zu dem Arbeitsraum ausströmen kann. Die Ventilanordnung steuert die Verbindung/Trennung der Wärmeübertragereinheiten mit/von dem Kreisprozess derart, dass die Wärmeübertragereinheiten diese Phasen jeweils nacheinander und zeitversetzt durchlaufen. Das Wärmequellenmedium aber durchläuft die Wärmequellenmedium-Durchgänge der einzelnen Wärmeübertragereinheiten parallel und kontinuierlich. Ein Schema dieser Wärmeübertrageranordnung und der Integration in den "Misselhorn"-Prozess ist in der Figur 2 gezeigt.

Mit der Anlage bzw. dem Verfahren nach dem "Misselhorn"-Prozess ist eine annähernd kontinuierliche Zuführung von diskontinuierlich erhitztem Arbeitsmedium unter Druck bzw. von verdampftem Arbeitsmedium zu dem Arbeitsraum der Arbeitsmaschine, wo es unter Umwandlung in mechanische Energie entspannt wird, möglich. Weil das Arbeitsmedium in mehreren Fraktionen getrennt voneinander und zeitlich versetzt in separaten Wärmeübertragereinheiten erhitzt und druckerhöht bzw. verdampft wird, können auch Wärmequellen mit einem relativ niedrigen Temperaturniveau effektiv genutzt werden. Durch die in Fraktionen getrennte und zeitlich versetzte Erhitzung und Verdampfung der einzelnen Fraktionen des Arbeitsmediums steht jeweils eine längere Zeitspanne zur Verfügung, um das Arbeitsmedium zu verdampfen.

Die DE 102010033124 A1 beschreibt eine Brennkraftmaschine mit einer Wärmerückgewinnungsvorrichtung mit einer Fördereinheit, zumindest zwei parallel in einem Arbeitsmittelkreislauf angeordneten und von einem Arbeitsmittelstrom durchströmbaren Wärmetauschern, einer Expansionsvorrichtung und einem Kondensator. Zwischen der Fördereinheit und den Wärmetauschern im Arbeitsmittelkreislauf ist eine Verteilungseinrichtung derart angeordnet, dass der Arbeitsmittelstrom in Arbeitsmittelteilströme aufgeteilt werden und der durch den jeweiligen Wärmetauscher strömende Arbeitsmittelteilstrom zur Anpassung an die Betriebszustände der Brennkraftmaschine steuer- und/oder regelbar ist. Die Wärmetauscher sind hintereinander in dem als Wärmequellenmedium dienenden Abgasstrom angeordnet und werden nacheinander mit der Verlustwärme des Abgasstromes beaufschlagt.

Die DE 10200706259 A1 beschreibt eine ähnliche Anordnung von mehreren bezüglich des Arbeitsmittelteilstroms parallel angeordneten Wärmetauschern bei einer Brennkraftmaschine, wobei keine steuerbare Verteilungseinrichtung vorgesehen aber jedem Wärmetauscher eine separate Pumpe zugeordnet ist.

Die EP 2522828 A2 beschreibt einen ORC-Kreisprozess, bei dem mehrere bezüglich des Arbeitsmittelteilstroms parallel angeordnete Wärmetauscher sequentiell von einem als Wärmequellenmedium dienenden Ladeluftstrom durchströmt werden, um dessen Wärme zur Vorerwärmung des Arbeitsmediums im Kreisprozess zu nutzen.

Die CA 2744404 A1 beschreibt einen ORC-Kreisprozess, bei dem zur Erhöhung der aufnehmbaren Wärmemenge aus dem Boden oder der Umgebungsluft eine Vielzahl von Verdampfern in einer Matrix parallel und seriell bezüglich des Arbeitsmittelteilstroms angeordnet sind und alle Verdampfer parallel und gleichzeitig von dem Wärmequellenmedium durchströmt werden.

Die US 2012/111003 A1 offenbart eine Abwärme-Nutzanordnung für einen Verbrennungsmotor, bei der zumindest zwei Wärmeübertrager in Form eines Überhitzers und eines Verdampfers mit ihren Wärmequellenmediumdurchgängen seriell in einer Ringanordnung verbunden sind. Ein Druckminderungsventil ist in der Wärmequellenmediumleitung zwischen dem Überhitzer und dem Verdampfer angeordnet, während eine Pumpe und ein Rückschlagventil in einer Strömungsleitung angeordnet sind, welche von einer Bypass-Leitung, die den Wärmequellenmedium-Auslass des Verbrennungsmotors direkt und ohne ein Ventil mit dem Eingang des Wärmequellenmediumdurchgangs des Verdampfers verbindet und im weiteren Verlauf mit dem Eingang des Wärmequellenmediumdurchgangs des Überhitzers verbunden ist.

Mit der Erfindung soll der Prozess der Verdampfung des Arbeitsmediums, insbesondere für eine Nutzung in einer Anlage und einem Verfahren zur Rückgewinnung von Energie aus Wärme in einem thermodynamischen Kreisprozess, vorzugsweise aber nicht ausschließlich dem "Misselhorn"-Prozess, weiter verbessert werden, damit die Nutzung der Energie der jeweiligen Wärmequelle mit höherem Wirkungsgrad erfolgen und dampfförmiges Arbeitsmedium mit möglichst konstant hohem Druck bereitgestellt und insbesondere die Pinch-Point Limitierung der herkömmlichen ORC Anlagen umgangen werden kann.

Zur Lösung bringt die Erfindung eine Anordnung mit mehreren Wärmeübertragern zum Verdampfen eines Arbeitsmediums durch Wärmeübertragung von einem Wärmequellenmedium mit den Merkmalen des Patentanspruches 1 und ein Verfahren zum Verdampfen eines Arbeitsmediums durch Wärmeübertragung von einem Wärmequellenmedium in einer Anordnung mit mehreren Wärmeübertragern mit den Merkmalen des Patentanspruches 10 in Vorschlag. Bevorzugte Ausgestaltungen der Anordnung und des Verfahrens sind in den abhängigen Ansprüchen angegeben.

Die Erfindung betrifft demnach eine Anordnung mit mehreren Wärmeübertragern zum Verdampfen eines Arbeitsmediums durch Wärmeübertragung von einem Wärmequellenmedium, wobei jeder Wärmeübertrager einen Wärmequellenmedium-Durchgang und einen davon getrennten Arbeitsmediumraum besitzt und die Wärmequellenmedium-Durchgänge der Wärmeübertrager seriell, vorzugsweise in einer Ringanordnung, miteinander verbunden oder verbindbar sind, wobei zwischen den Wärmequellenmedium-Durchgängen von jeweils zwei seriell aufeinanderfolgenden Wärmeübertragern in der Ringanordnung jeweils ein Ventilmittel vorgesehen ist, wobei eine Zuführleitung für das Wärmequellenmedium vorgesehen ist, die selektiv mit dem Eingang des Wärmequellenmedium-Durchgangs jedes Wärmeübertragers verbindbar und trennbar ist, und wobei eine Abführleitung für das Wärmequellenmedium vorgesehen ist, die selektiv mit dem Ausgang des Wärmequellenmedium-Durchgangs jedes Wärmeübertragers verbindbar und trennbar ist.

Die Erfindung betrifft demnach auch ein Verfahren zum Verdampfen eines Arbeitsmediums durch Wärmeübertragung von einem Wärmequellenmedium in einer Anordnung mit mehreren Wärmeübertragern, die jeweils einen Wärmequellenmedium-Durchgang und einen davon getrennten Arbeitsmediumraum besitzen und deren Wärmequellenmedium-Durchgänge seriell, vorzugsweise in einer Ringanordnung, miteinander verbunden oder verbindbar sind, mit den Schritten eines sequentiellen Verbindens einer Zuführleitung für das Wärmequellenmedium mit dem Eingang des Wärmequellenmedium-Durchgangs eines ersten Wärmeübertragers und sequentielles Verbinden einer Abführleitung für das Wärmequellenmedium mit dem Ausgang des Wärmequellenmedium-Durchgangs eines zweiten Wärmeübertragers, während die Zuführleitung und Abführleitung von dem Eingang des Wärmequellenmedium-Durchgangs des zweiten bzw. von dem Ausgang des Wärmequellenmedium-Durchgangs des ersten Wärmeübertragers und, sofern vorhanden, von den Ein- und Ausgängen der Wärmequellenmedium-Durchgänge weiterer Wärmeübertrager der Anordnung getrennt wird.

Die erfindungsgemäße Anordnung bzw. das erfindungsgemäße Verfahren ermöglicht eine effizientere Ausnutzung der Wärmeenergie der jeweiligen Wärmequelle, indem das Wärmequellenmedium der Wärmequelle beispielsweise direkt in die Wärmeübertrager eingeleitet wird, und das Wärmequellenmedium nach dem Durchlauf durch einen ersten Wärmeübertrager und einem teilweisen Entzug der Wärmeenergie seriell durch die anderen Wärmeübertrager der Anordnung geleitet wird. Die Reihenfolge des Durchlaufs des Wärmequellenmediums durch die Wärmeübertrager kann quasi zyklisch weitergeschaltet werden, so dass in jedem Zyklus das flüssige Arbeitsmedium in einen anderen der Wärmeübertrager eingeleitet wird (der in dieser Phase das niedrigste Temperatur- und/oder Druckniveau des Arbeitsmediums aufweist) bzw. das erhitzte und verdampfte Arbeitsmedium aus einem anderen Wärmeübertrager (der in dieser Phase das höchste Temperatur- und/oder Druckniveau des Arbeitsmediums aufweist) ausgetragen wird.

Mit der erfindungsgemäßen Anordnung wird ferner die Pinch-Point Limitierung der herkömmlichen ORC Anlagen umgangen. Durch die serielle Anordnung, vorzugsweise in der Ringanordnung, von mehreren als Verdampfer im Batch Betrieb arbeitenden Wärmeübertragern, und der Weiterleitung des heissen Wärmequellenmediums von Verdampfern mit höherer Temperatur des Arbeitsmediums zu Verdampfern mit niedrigerer Temperatur des Arbeitsmediums wird in jedem Verdampfer der jeweils notwendige Pinch-Point eingehalten. Da nur der Verdampfer mit der höchsten Temperatur des Wärmequellenmediums an die Arbeits- bzw. Entspannungsmaschine angeschlossen ist, ergibt sich immer ein hoher Druck des Arbeitsmediums beim Ausströmen zur Entspannnungsmaschine und somit ein guter thermischer Wirkungsgrad der Anlage. In den gerade mit der Arbeitsmaschine verbundenen nachgeschalteten Verdampfern wird die Wärmequelle durch Wärmeübertragung auf das Arbeitsmedium im jeweiligen Verdampfer weiter ausgekühlt und der Systemwirkungsgrad steigt (siehe Fig. 7, die das T-Q-Diagramm für eine Wärmeübertrageranordnung mit 10 als Verdampfer arbeitenden Wärmeübertragern zeigt).

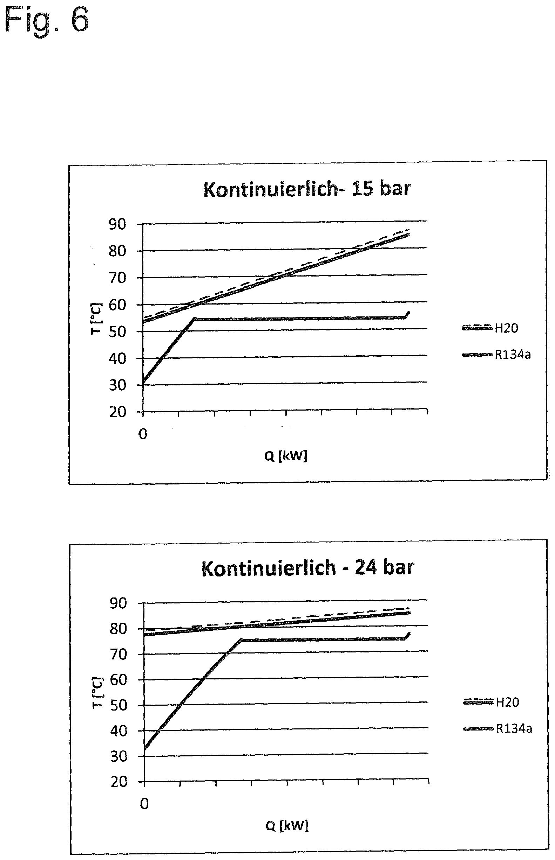

Als "Pinch-Point" wird die Temperaturdifferenz zwischen dem wärmeabgebendem (dem relativ heissen) und dem wärmeaufnehmendem (dem relativ kalten) Massenstrom am Punkt der der nächsten Annäherung der TQ-Kurven von Wärmequellenmedium und Arbeitsmedium bezeichnet. Nur wenn eine Temperaturdifferenz zwischen dem heissen und dem kalten Medium besteht, die i.d.R. mindestens 5K bis 10K betragen sollte, findet eine Wärmeübertragung in endlicher Zeit und mit wirtschaftlich vertretbar großen Wärmeübertragungsflächen statt. Der ORC Prozess kann prinzipiell in 2 verschiedenen Modi (und Zwischenstufen davon) gefahren werden:
a) gute Ausnützung der Wärmequelle, d.h. möglichst große Temperaturabsenkung des heissen Wärmequellenmediums, d.h. ein optimierter Systemwirkungsgrad. Der Systemwirkungsgrad ist eine Maß dafür, wie viel der insgesamt zur Verfügung stehenden Wärme in Arbeit umgesetzt wird (siehe Fig. 6, oben), oder
b) gute Ausnützung der übertragenen Wärmeleistung, d.h. hoher thermischer Wirkungsgrad, bei dann allerdings schlechterer Ausnützung der Wärmequelle und entsprechend niedrigerem Systemwirkungsgrad. Der thermische Wirkungsgrad beschreibt, wie effizient die tatsächlich übertragene Wärme in Arbeit umgesetzt wird (siehe Fig. 6, unten).

Oftmals wird ein Kompromiss angestrebt, je nach Verwendungsmöglichkeit der Restwärme nach dem ORC und/oder anderen Faktoren. Um eine möglichst hohe Leistung der ORC Anlage erzielen zu können muss das Druckniveau des Arbeitsmediums, das den Verdampfer verlässt und in die Arbeits- bzw. Entspannungsmaschine, z.B. eine Turbine oder einen Kolbenmotor einströmt, möglichst hoch sein. Auf Grund der Thermodynamik bedingt ein hoher Druck eine hohe Temperatur des Arbeitsmediums. Diese hohe Temperatur plus die Temperaturdifferenz auf Grund des Pinch-Points ergibt die minimal notwendige Temperatur des heissen Wärmequellenmediums im Verdampfer. Je höher das gewünschte Druck- und Temperaturniveau des Arbeitsmediums, desto weniger kann also die Wärmequelle ausgekühlt werden. Um einen möglichst hohen Systemwirkungsgrad erzielen zu können wird die Wärmequelle stärker ausgekühlt, die maximale Temperatur des Arbeitsmediums liegt um den Pinch-Point Abstand unter der niedrigen, ausgekühlten Temperatur des Wärmequellenmediums. Die hohen Temperaturen des Wärmequellenmediums bleiben ungenutzt, d.h. es ist nur ein relativ niedriger Druck des Arbeitsmediums und damit eine geringere Leistung der Entspannnungsmaschine erreichbar.

Die Kombination der erfindungsgemäßen Anordnung von Wärmeübertragern zum Verdampfen eines Arbeitsmediums durch Wärmetausch mit einem Wärmequellenmedium ist deshalb besonders vorteilhaft in Verbindung mit der aus der DE 102013009351 bekannten Anlage zur Rückgewinnung von Energie aus Wärme in einem thermodynamischen Kreisprozess kombinierbar, weil diese Anlage auf der zyklischen Verbindung immer jeweils des Wärmeübertragers aus mehreren Wärmeübertragern mit dem Arbeitsraum einer Arbeitsmaschine vorsieht, der das höchste Temperaturniveau bzw. das Arbeitsmedium mit dem höchsten Temperatur- und/oder Druckniveau aufweist, während der oder ein andere(r) Wärmeübertrager mit flüssigem Arbeitsmedium beschickt und aufgeheizt wird und ggf. weitere Wärmeübertrager unter Einschluss des Arbeitsmediums aufgeheizt werden.

Im Folgenden wird die erfindungsgemäße Anordnung und das Verfahren anhand der beigefügten Zeichnungen erläutert. Darin zeigen:
Fig. 1 eine schematische Darstellung eines ORC-Prozesses nach dem Stand der Technik mit direkter Nutzung des Wärmequellenmediums im Wärmeübertrager des Arbeitsmediumkreislaufes;
Fig. 2 eine schematische Darstellung des "Misselhorn"-Prozesses mit einer Anordnung der Wärmeübertrager gemäß der DE 102013009351;
Fig. 3 eine schematische Darstellung des "Misselhorn"-Prozesses mit einer erfindungsgemäßen Anordnung der Wärmeübertrager gemäß einer ersten Ausführungsform;
Fig. 4A-C eine schematische Darstellung der Schaltzustände innerhalb eines Zyklus bei der Anordnung der Wärmeübertrager gemäß Fig. 3; und
Fig. 5 eine schematische Darstellung einer erfindungsgemäßen Anordnung der Wärmeübertrager gemäß einer zweiten Ausführungsform;
Fig. 6 TQ-Diagramme für einen typischen ORC-Prozess in zwei unterschiedlichen Betriebsmodi; und
Fig. 7 ein TQ-Diagramm für eine erfindungsgemäße Anordnung von 10 Wärmetauschern.

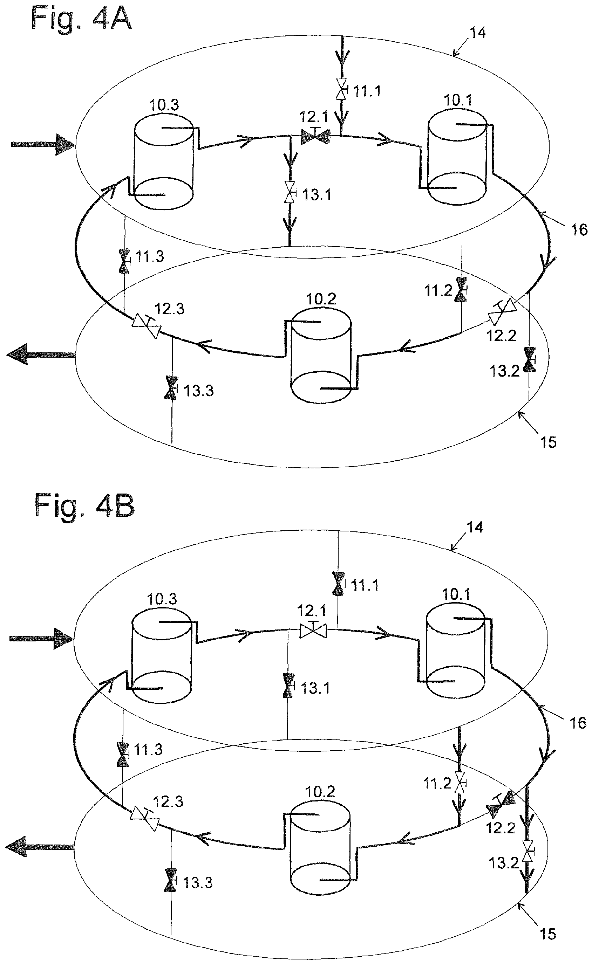

Die Figuren 1 und 2 wurden in der Einleitung bereits erläutert. Die Figur 3 zeigt eine der Figur 2 entsprechende schematische Darstellung des "Misselhorn"-Prozesses mit einer erfindungsgemäßen Anordnung der Wärmeübertrager gemäß einer ersten Ausführungsform. Die Funktionsweise dieser Anordnung von Wärmeübertragern wird anhand der Folge der Figuren 4A bis 4C erläutert. Obwohl die gezeigte Ausführungsform zur Erläuterung von drei als Verdampfer arbeitenden Wärmeübertragern oder Wärmetauschern ausgeht, ist die Anzahl der Wärmeübertrager n ≥ 2.

Bei einer Erhöhung der Anzahl der als Verdampfer arbeitenden und sequentiell mit dem Wärmequellenmedium durchströmten Wärmeübertrager nähern sich die Kurvenform des Arbeitsmediums und des Wärmequellenmediums im TQ-Diagramm der Anordnung immer weiter an. Ferner ist zu beachten, dass die Arbeitsmediumleitungen und Arbeitsmediumräume der Wärmeübertrager in den Figuren 4A bis 4C zur Erhöhung der Klarheit nicht dargestellt sind.

Jeder Wärmeübertrager 10.1, 10.2, 10.3 der Anordnung besitzt einen Wärmequellenmedium-Durchgang mit Ein- und Ausgang (nicht gezeigt) und einen davon getrennten Arbeitsmediumraum, ebenfalls mit Ein- und Ausgang (nicht gezeigt), so dass die Stoffströme von Wärmequellenmedium und Arbeitsmedium getrennt sind. Zwischen dem Wärmequellenmedium-Durchgang und dem Arbeitsmediumraum ist eine möglichst wirksame Wärmeübertragung sicherzustellen, wobei die spezifische Bauart der Wärmeübertrager für die Funktionsweise der Erfindung nicht von Bedeutung ist, sondern lediglich eine Optimierungsaufgabe darstellt. Beispielsweise können die Wärmeübertrager als Rohrbündelwärmetauscher ausgeführt sein.

Die Wärmequellenmedium-Durchgänge der Wärmeübertrager sind seriell, vorzugsweise in einer Ringanordnung oder - leitung 16 miteinander verbunden oder verbindbar, indem der Ausgang des Wärmequellenmedium-Durchgangs eines Wärmeübertragers mit dem Eingang des Wärmequellenmedium-Durchgangs eines in der Ringanordnung nachfolgenden Wärmeübertragers verbunden ist, wobei zwischen den Wärmequellenmedium-Durchgängen von jeweils zwei seriell aufeinanderfolgenden Wärmeübertragern 10.1, 10.2, 10.3 in der Ringanordnung jeweils ein Ventil 12.1, 12.2, 12.3 vorgesehen ist, mit dem die Verbindung selektiv unterbrochen werden kann. Die Ventile 12.1, 12.2, 12.3 sind als schaltbare und vorzugsweise fernbetätigbare Ventile ausgestaltet. Sie können auch als gesteuerte oder einfache Rückschlagventile ausgeführt sein, wenn aufgrund des Druckniveaus des Wärmequellenmediums sichergestellt ist, dass eine Rückströmung in den Wärmequellenmedium-Durchgang eines Wärmeübertragers innerhalb der Ringanordnung stromauf der Einleitung des Wärmequellenmediums nicht auftritt.

Eine Zuführleitung 14 für das Wärmequellenmedium ist selektiv mit dem Eingang des Wärmequellenmedium-Durchgangs jedes Wärmeübertragers verbindbar und eine Abführleitung 15 für das Wärmequellenmedium ist ebenfalls selektiv mit dem Ausgang des Wärmequellenmedium-Durchgangs jedes Wärmeübertragers verbindbar. Dazu sind in den Verbindungsleitungen zwischen der Zuführleitung und dem Abschnitt der Ringleitung zwischen dem jeweiligen Ringleitungsventil 12.1, 12.2, 12.3 und dem jeweils stromabwärts davon befindlichen Wärmeübertrager ebenfalls schaltbare und vorzugsweise fernbetätigbare Ventile 11.1, 11.2, 11.3 vorgesehen, um die selektiven Verbindungen der Zuführleitung mit den Wärmequellenmedium-Durchgängen herzustellen und zu unterbrechen. Entsprechend sind auch in den Verbindungsleitungen zwischen der Abführleitung 15 und dem Abschnitt der Ringleitung zwischen dem jeweiligen Ringleitungsventil 12.1, 12.2, 12.3 und dem jeweils stromaufwärts davon befindlichen Wärmeübertrager ebenfalls schaltbare und vorzugsweise fernbetätigbare Ventile 13.1, 13.2, 13.3 vorgesehen, um die selektiven Verbindungen der Abführleitung mit den Wärmequellenmedium-Durchgängen herzustellen und zu unterbrechen.

Die Kombination von Verbindungsleitungen und Ventilen sowie die Schaltbarkeit der Ventile der Anordnung sind so ausgestaltet, dass innerhalb eines im Folgenden noch beschriebenen Zyklus der Eingang des Wärmequellenmedium-Durchgangs des Wärmeübertragers, der von den Wärmeübertragern der Ringanordnung das höchste Druck- und/oder Temperaturniveau des Arbeitsmediums hat, mit der Zuführleitung für das Wärmequellenmedium verbindbar ist, und dass der Ausgang des Wärmequellenmedium-Durchgangs des Wärmeübertragers, der von den Wärmeübertragern der Ringanordnung das niedrigste Druck- und/oder Temperaturniveau des Arbeitsmediums hat, mit der Abführleitung für das Wärmequellenmedium verbindbar ist. Bei mehr als zwei Wärmeübertragern in der Anordnung ist bei dem bzw. den Wärmeübertrager(n), der/die nicht das höchste oder das niedrigste Druck- bzw. Temperaturniveau des Arbeitsmediums aufweist/aufweisen, der Wärmequellenmedium-Durchgang nur mit dem Wärmequellenmedium-Durchgang des oder eines der anderen Wärmeübertrager(s) verbindbar, so dass das Wärmequellenmedium seriell durch die Wärmeübertrager geleitet wird.

Vorzugsweise sind die Zuführ- und Abführleitung für das Wärmequellenmedium sequentiell und synchron mit den Wärmequellenmedium-Durchgängen der Wärmeübertrager der Anordnung verbindbar, damit die beschriebene Weiterschaltung der Wärmeübertrager innerhalb eines jeden Zyklus zeitgleich und klar abgegrenzt erfolgen kann. Die Anordnung ist ferner so ausgestaltet, dass die Zeitdauer der Verbindung der Zuführ- und Abführleitung für das Wärmequellenmedium mit dem Wärmequellenmedium-Durchgang eines jeweiligen Wärmeübertragers auf einen entsprechend der Auslegung der Anordnung ermittelten und zumindest für eine gewisse Betriebsdauer über mehrere Zyklen voreingestellt ist. Vorzugsweise ist es aber auch möglich, dass die Zeitdauer in Abhängigkeit vom Druck und/oder der Temperatur des Arbeitsmediums in dem Wärmeübertrager gesteuert wird, der von den Wärmeübertragern der Anordnung das höchste Druck- bzw. Temperaturniveau des Arbeitsmediums hat, weil dieser Wärmeübertrager das verdampfte Arbeitsmedium für die Arbeitsmaschine bereitstellt. Mit dieser Steuerung kann eine quasi-kontinuierliche Versorgung der Arbeitsmaschine mit dampfförmigem Arbeitsmedium bei möglichst konstantem Druckniveau und damit ein Betrieb ohne grosse Leistungs- oder Drehzahlschwankungen gewährleistet werden.

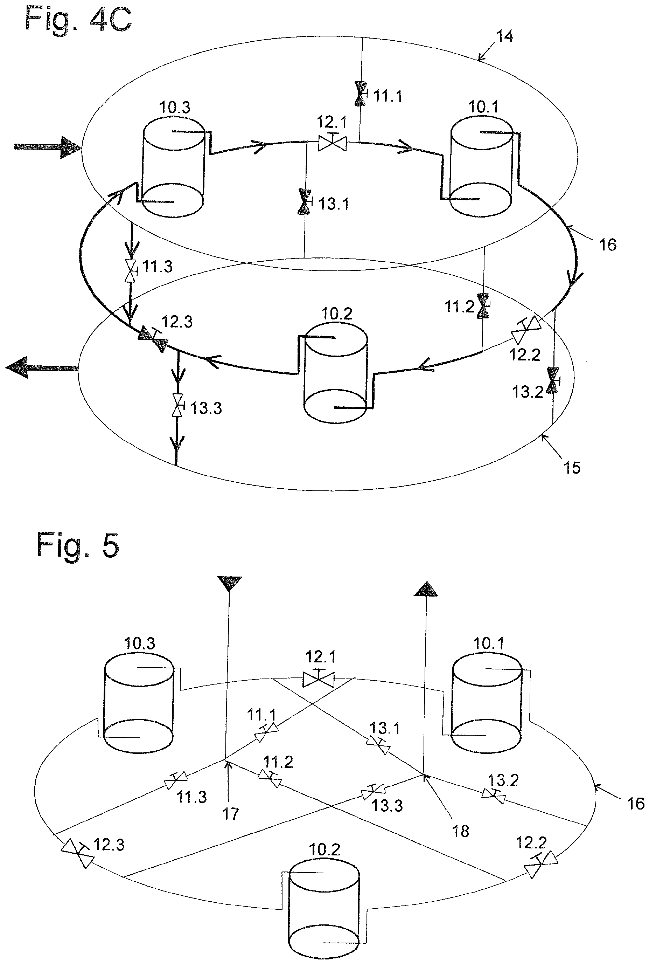

Die Verbindungsleitungen und schaltbaren Ventile für das Arbeitsmedium sowie die Arbeitsmediumräume sind in den Figuren 4 und 5 nicht gezeigt, aber in der Figur 3 angedeutet. Die erfindungsgemäße Anordnung von mehreren Wärmeübertragern ist hinsichtlich des Arbeitsmediumkreislaufes in den geschlossenen Arbeitsmediumkreislauf beispielsweise des aus der DE 102013009351 bekannten "Misselhorn"-Kreisprozesses integrierbar und modifiziert die darin verwendete Wärmetauscher- bzw. Wärmeübertrageranordnung (siehe Figur 3). Die Offenbarung der DE 102013009351 wird deshalb hier hinsichtlich des Arbeitsmediumkreislaufes durch Bezugnahme insgesamt in die Offenbarung einbezogen. Auch die erfindungsgemäße Anordnung steuert nämlich mittels einer entsprechenden Ventilanordnung die Verbindung/Trennung der Wärmeübertrager- bzw. Wärmetauschereinheiten mit/von dem Kreisprozess derart, dass die Wärmeübertragereinheiten die einzelnen Phasen von Einleitung des Arbeitsmediums, Aufheizen des Arbeitsmediums unter Einschluss in den jeweiligen Wärmeübertrager und Ausleitung des dampfförmigen Arbeitsmediums aus dem Wärmeübertrager in die Arbeitsmaschine jeweils nacheinander und zeitversetzt durchlaufen.

Die Anordnung ist dabei so ausgestaltet, dass die Einleitung des Arbeitsmediums in den Arbeitsmediumraum des Wärmeübertragers erfolgt, der von den Wärmeübertragern der Anordnung das niedrigste Druck- und/oder Temperaturniveau des Arbeitsmediums aufweist, und die Ausleitung des Arbeitsmediums aus dem Arbeitsmediumraum des Wärmeübertragers erfolgt, der von den Wärmeübertragern der Anordnung das höchste Druck- und/oder Temperaturniveau des Arbeitsmediums aufweist, und wobei die Zeitspanne der Einleitungsphase und die Zeitspanne der Ausleitungsphase im wesentlichen gleich lang sind, und die Weiterschaltung der Einleitungs- und Ausleitungsphasen zwischen den Wärmeübertragern der Anordnung synchron und sequentiell erfolgt. Wenn die Anordnung, was bevorzugt ist, mindestens drei Wärmeübertrager aufweist, ist sie ferner so ausgestaltet, dass der/die Wärmeübertrager, der/die nicht das höchste bzw. das niedrigste Druck- bzw. Temperaturniveau des Arbeitsmediums aufweist/aufweisen, das Arbeitsmedium während der Einleitungs- und Ausleitungsphase der anderen Wärmeübertrager im Arbeitsmediumraum eingeschlossen bleibt. Bei n Verdampfern oder Wärmeübertragern kommt es also grundsätzlich zu n unterschiedlichen Schaltungssituationen der Ventile beim Betrieb der Anordnung entsprechend diesen Phasen.

Im Folgenden wird ein Schaltzyklus der Anordnung der Wärmeübertrager anhand einer Anordnung mit 3 Wärmeübertragern und unter Bezug auf die Figuren 4A-4C beispielhaft beschrieben. Die dazu erforderlichen typischen drei Schaltsituationen sind in den Figuren 4A bis 4C dargestellt.

In der Schaltsituation eins (Figur 4A) wird das verdampfte Arbeitsmedium mit hohem Druck aus dem Wärmeübertrager 10.1 (entsprechend beispielsweise der Phase 3 des Wärmeübertragerbetriebes bei der aus der DE 102013009351 bekannten Anlage) in die Arbeitsmaschine geleitet und der Wärmeübertrager 10.3 wird gerade durch eine Pumpe mit flüssigem Arbeitsmedium befüllt. Um dem Wärmeübertrager 10.1 den heißesten und Wärmeübertrager 10.3 den aufgrund des Durchlaufs durch andere Wärmeübertrager bereits teilweise abgekühlten Wärmequellenmediumstrom zuzuführen, sind die Ventile 11.1, 12.2, 12.3 sowie 13.1 geöffnet. Die restlichen Ventile sind geschlossen. Durch das offene Ventil 11.1 wird der Wärmequellenmediumstrom vor dem Wärmeübertrager 10.1 in die "Ringleitung" 16 eingespeist und kühlt sich beim Durchlaufen der drei Wärmeübertrager ab (geöffnete Ventile 12.2. und 12.3). Abschließend wird das abgekühlte Wärmequellenmedium durch das offene Ventil 13.1 (da Ventil 12.1 geschlossen ist) aus der "Ringleitung" entfernt und in den Wärmequellenmedium-Rücklauf eingespeist.

In der Schaltsituation zwei (Figur 4B) soll der Wärmeübertrager 10.2 mit dem heißen Wärmequellenmediumstrom und der Wärmeübertrager 10.1 mit dem abgekühlten Wärmequellenmediumstrom beschickt werden. Dafür sind die Ventile 11.2 und 13.2 sowie 12.3 und 12.1 geöffnet. Die restlichen Ventile sind wiederum geschlossen.

In der Schaltsituation drei (Figur 4C) soll durch den Wärmeübertrager 10.3 der heiße Wärmequellenmediumstrom und durch den Wärmeübertrager 10.2 der abgekühlte Wärmequellenmediumstrom geleitet werden. Dafür sind die Ventile 11.3 und 13.3 sowie 12.1 und 12.2 geöffnet. Die restlichen Ventile sind wiederum geschlossen. Danach ist der Zyklus beendet und er beginnt wieder mit der Schaltsituation eins.

In der Figur 5 ist eine zweite Ausführungssform der Anordnung gezeigt, bei der die Zu- und Abführung des heißen und des abgekühlten Wärmequellenmediumstroms jeweils als Sternschaltung 17 bzw. 18 realisiert ist.

In einer (nicht gezeigten) bevorzugten Ausführung der Anordnung mit mehreren Wärmeübertragern gemäß der Erfindung sind die Wärmeübertrager der Anordnung so angeordnet oder ausgestaltet, dass sich der Eingang des Wärmequellenmedium-Durchgangs jedes Wärmeübertragers an einem tieferen Positionsniveau befindet als der Ausgang des jeweiligen Wärmeübertragers. In dieser bevorzugten Ausgestaltung durchströmt das Wärmequellenmedium die Wärmequellenmedium-Durchgänge der Wärmeübertrager vertikal von unten nach oben und damit gegen den Einfluß der Schwerkraft. Auch wenn der Wärmequellenmedium-Durchgang im Wärmeübertrager beispielsweise eine Zick-Zack-Form besitzt, ist sichergestellt, dass das Wärmequellenmedium so durch die Wärmequellenmedium-Durchgänge der Wärmeübertrager geleitet wird, dass es die Wärmequellenmedium-Durchgänge zumindest teilweise gegen den Einfluß der Schwerkraft durchströmt.

Die schematischen Darstellungen von Ausführungsformen der Erfindung dienen lediglich der Erläuterung der Erfindung. Deshalb sind die Strecken der Verbindungsleitungen zwischen den einzelnen Komponenten und die Anordnung, die Anzahl und die Ausführung von Ventilen lediglich beispielhaft und dienen zur Erläuterung des Fuktionsprinzips. Besonders hervorzuheben ist ferner, dass die schematisch dargestellten Anordnungen von Wärmeübertragern oder Wärmetauschern jeweils drei Wärmeübertragereinheiten aufweisen, wobei erfindungsgemäß eine Wärmeübertrageranordnung mit mindestens zwei voneinander unabhängigen Wärmeübertragereinheiten ausreichend sein kann und auch mehr als die drei Wärmeübertragereinheiten eingesetzt werden können.

Außerdem ist die Erfindung nicht auf eine bestimmte Bauform der Wärmeübertrager beschränkt, wobei insbesondere die Darstellung der Wärmeübertrager in den Figuren 4A-C und 5 nur schematisch ist und nur die Schaltung des Wärmequellenmedium-Durchgangs innerhalb der Anordnung verdeutlichen aber keine bestimmte Bauform des Wärmeübertragers festlegen soll.

Als Arbeitsmedium für die erfindungsgemäße Anordnung kommen alle in herkömmlichen Kreisprozessen wie den ORC-Kreisprozessen und dem "Misselhorn"-Prozess verwendbaren Medien in Betracht, insbesondere organische oder synthetische Stoffe, beispielsweise R245fa, Ethanol oder R134a.

Der Begriff "Wärmequellenmedium" umfasst ferner sowohl das unmittelbar von einer Wärmequelle gelieferte und direkt in den Wärmeübertragern nutzbare Medium wie heißes Abwasser, Kühlwasser etc., aber auch ein Wärmetransportmedium wie Thermoöl und dgl., das in einem geschlossenen Zwischenkreislauf zirkuliert und dem Transport der Wärme von einer entfernten oder für die direkte Nutzung ungeeignete Wärmequelle zu den Wärmeübertragern des Kreisprozesses dient.

Als Wärmequelle für die erfindungsgemäße Anordnung kommen schließlich alle Wärmequellen in Form von Nutz- oder Abwärme aus den in der Einleitung beschriebenen Quellen in Betracht, die ein ausreichend hohes Temperaturniveau von mindestens 60° Celsius, vorzugsweise 60-100° Celsius und einen ausreichend großen Volumen- oder Massenstrom liefern. Die erfindungsgemäße Anordnung ist aber auch mit Wärmequellen mit höherem Temperaturniveau einsetzbar.

Obwohl in den Figuren 3-5 eine Ausführungsform mit Einzelventilen dargestellt ist, können alle Ventile oder Gruppen der Ventile z.B. als Drehschieber mit entsprechend vielen Ein- und Ausgängen ausgeführt sein. Der in den Ansprüchen gewählte Begriff "Ventilmittel" soll daher verschiedene Ausgestaltungen eines Mittels zum Öffnen/Schließen einer Fluidverbindung umfassen.

## Patentansprüche

1. Anordnung mit mehreren Wärmeübertragern zum Verdampfen eines Arbeitsmediums durch Wärmeübertragung von einem Wärmequellenmedium, wobei
jeder Wärmeübertrager (10.1,10.2,10.3) einen Wärmequellenmedium-Durchgang und einen davon getrennten Arbeitsmediumraum besitzt und die Wärmequellenmedium-Durchgänge der Wärmeübertrager (10.1,10.2,10.3) seriell, vorzugsweise in einer Ringanordnung, miteinander verbunden oder verbindbar sind,
zwischen den Wärmequellenmedium-Durchgängen von jeweils zwei seriell aufeinanderfolgenden Wärmeübertragern (10.1,10.2,10.3) jeweils ein Ventilmittel (12.1,12.2,12.3) vorgesehen ist, **dadurch gekennzeichnet, dass** eine Zuführleitung (14) für das Wärmequellenmedium so vorgesehen ist, dass sie selektiv mit dem Eingang des Wärmequellenmedium-Durchgangs jedes der mehreren Wärmeübertrager (10.1,10.2,10.3) verbindbar und trennbar ist, und
eine Abführleitung (15) für das Wärmequellenmedium so vorgesehen ist, dass sie selektiv mit dem Ausgang des Wärmequellenmedium-Durchgangs jedes der mehreren Wärmeübertrager (10.1,10.2,10.3) verbindbar und trennbar ist.

2. Anordnung mit mehreren Wärmeübertragern gemäß Anspruch 1, wobei schaltbare Ventilmittel (11.1, 11.2, 11.3, 13.1, 13.2, 13.3) vorgesehen sind, um die selektiven Verbindungen der Zuführ- und Abführleitung (14,15) mit den Wärmequellenmedium-Durchgängen herzustellen oder zu unterbrechen.

3. Anordnung mit mehreren Wärmeübertragern gemäß Anspruch 1 oder 2, wobei die Anordnung so ausgestaltet ist, dass der Wärmequellenmedium-Durchgang des Wärmeübertragers (10.1,10.2,10.3), der von den Wärmeübertragern (10.1,10.2,10.3) der Anordnung das höchste Druck- und/oder Temperaturniveau des Arbeitsmediums hat, mit der Zuführleitung (14) für das Wärmequellenmedium verbindbar ist, und dass der Wärmequellenmedium-Durchgang des Wärmeübertragers (10.1,10.2,10.3), der von den Wärmeübertragern (10.1,10.2,10.3) der Anordnung das niedrigste Druck- und/oder Temperaturniveau des Arbeitsmediums hat, mit der Abführleitung (15) für das Wärmequellenmedium verbindbar ist.

4. Anordnung mit mehreren Wärmeübertragern gemäß einem der vorstehenden Ansprüche, wobei die Anordnung so ausgestaltet ist, dass die Zuführ- und Abführleitung (14, 15) für das Wärmequellenmedium sequentiell und synchron mit den Eingängen bzw. Ausgängen der Wärmequellenmedium-Durchgänge der Wärmeübertrager (10.1, 10.2, 10.3) der Anordnung verbindbar sind.

5. Anordnung mit mehreren Wärmeübertragern gemäß einem der vorstehenden Ansprüche, wobei die Anordnung so ausgestaltet ist, dass die Zeitdauer der Verbindung der Zuführ- und Abführleitung (14, 15) für das Wärmequellenmedium mit dem Wärmequellenmedium-Durchgang eines jeweiligen Wärmeübertragers (10.1,10.2,10.3) voreingestellt ist oder in Abhängigkeit vom Druck und/oder der Temperatur des Arbeitsmediums in dem Wärmeübertrager (10.1,10.2,10.3), der von den Wärmeübertragern (10.1,10.2,10.3) der Anordnung das höchste Druck- bzw. Temperaturniveau des Arbeitsmediums hat, steuerbar ist.

6. Anordnung mit mehreren Wärmeübertragern gemäß einem der vorstehenden Ansprüche, wobei die Anordnung so ausgestaltet ist, dass in einer Einleitungsphase die Einleitung des Arbeitsmediums in den Arbeitsmediumraum des Wärmeübertragers (10.1, 10.2, 10.3) erfolgen kann, der von den Wärmeübertragern (10.1,10.2,10.3) der Anordnung das niedrigste Druck- und/oder Temperaturniveau des Arbeitsmediums aufweist, und in einer Ausleitungsphase die Ausleitung des Arbeitsmediums aus dem Arbeitsmediumraum des Wärmeübertragers (10.1,10.2,10.3) erfolgen kann, der von den Wärmeübertragern (10.1, 10.2, 10.3) der Anordnung das höchste Druck- und/oder Temperaturniveau des Arbeitsmediums aufweist, und wobei die Zeitspanne der Einleitungsphase und die Zeitspanne der Ausleitungsphase im wesentlichen gleich lang eingestellt sind, und die Anordnung ferner so ausgestaltet ist, dass die Weiterschaltung der Einleitungs- und Ausleitungsphasen zwischen den Wärmeübertragern (10.1, 10.2, 10.3) der Anordnung synchron und sequentiell erfolgen kann.

7. Anordnung mit mehreren Wärmeübertragern gemäß Anspruch 6, wobei die Anordnung mindestens drei Wärmeübertrager (10.1, 10.2, 10.3) aufweist und die Anordnung so ausgestaltet ist, dass der/die Wärmeübertrager(n) (10.1,10.2,10.3), der/die nicht das höchste bzw. das niedrigste Druck- bzw. Temperaturniveau des Arbeitsmediums aufweist/aufweisen, das Arbeitsmedium während der Einleitungs- und Ausleitungsphase der anderen Wärmeübertrager (10.1, 10.2, 10.3) im Arbeitsmediumraum eingeschlossen bleibt.

8. Anordnung mit mehreren Wärmeübertragern gemäß Anspruch 7, wobei die Anordnung so ausgestaltet ist, dass bei dem/den Wärmeübertrager(n) (10.1, 10.2, 10.3), der/die nicht das höchste oder das niedrigste Druck- bzw. Temperaturniveau des Arbeitsmediums aufweist/aufweisen, der Wärmequellenmedium-Durchgang nur mit dem Wärmequellenmedium-Durchgang des oder eines der anderen Wärmeübertrager(s) (10.1,10.2,10.3) verbindbar ist.

9. Anordnung mit mehreren Wärmeübertragern gemäß einem der vorstehenden Ansprüche, wobei die Wärmeübertrager (10.1,10.2,10.3) der Anordnung so angeordnet oder ausgestaltet sind, dass sich der Eingang des Wärmequellenmedium-Durchgangs jedes Wärmeübertragers (10.1,10.2,10.3) an einem tieferen Positionsniveau befindet als der Ausgang des Wärmequellenmedium-Durchgangs des jeweiligen Wärmeübertragers (10.1,10.2,10.3).

10. Verfahren zum Verdampfen eines Arbeitsmediums durch Wärmeübertragung von einem Wärmequellenmedium in einer Anordnung mit mehreren Wärmeübertragern (10.1, 10.2, 10.3), die jeweils einen Wärmequellenmedium-Durchgang und einen davon getrennten Arbeitsmediumraum besitzen und deren Wärmequellenmedium-Durchgänge seriell, vorzugsweise in einer Ringanordnung, miteinander verbunden oder verbindbar sind, mit den Schritten:
sequentielles Verbinden einer Zuführleitung (14) für das Wärmequellenmedium mit dem Eingang des Wärmequellenmedium-Durchgangs eines ersten Wärmeübertragers der mehreren Wärmeübertrager (10.1,10.2,10.3) und sequentielles Verbinden einer Abführleitung (15) für das Wärmequellenmedium mit dem Ausgang des Wärmequellenmedium-Durchgangs eines zweiten Wärmeübertragers der mehreren Wärmeübertrager (10.1,10.2,10.3), während die Zuführleitung (14) und Abführleitung (15) von dem Eingang des Wärmequellenmedium-Durchgangs des zweiten bzw. von dem Ausgang des Wärmequellenmedium-Durchgangs des ersten Wärmeübertragers (10.1,10.2,10.3) und, sofern vorhanden, von den Ein- und Ausgängen der Wärmequellenmedium-Durchgänge weiterer Wärmeübertrager der mehreren Wärmeübertrager (10.1,10.2,10.3) der Anordnung getrennt wird.

11. Verfahren zum Verdampfen eines Arbeitsmediums gemäß Anspruch 10, wobei die Zuführ- und Abführleitung (14,15) für das Wärmequellenmedium sequentiell und synchron mit den Wärmequellenmedium-Durchgängen der jeweiligen Wärmeübertrager (10.1, 10.2, 10.3) verbunden bzw. getrennt werden.

12. Verfahren zum Verdampfen eines Arbeitsmediums gemäß Anspruch 10 oder 11, wobei der Wärmeübertrager (10.1, 10.2, 10.3), der von den Wärmeübertragern (10.1,10.2,10.3) das höchste Druck- und/oder Temperaturniveau des Arbeitsmediums aufweist, mit der Zuführleitung (14) für das Wärmequellenmedium verbunden wird, und der Wärmeübertrager (10.1,10.2,10.3), der von den Wärmeübertragern (10.1,10.2,10.3) das niedrigste Druck- und/oder Temperaturniveau des Arbeitsmediums aufweist, mit der Abführleitung (15) für das Wärmequellenmedium verbunden wird.

13. Verfahren zum Verdampfen eines Arbeitsmediums gemäß einem der Ansprüche 10 bis 12, wobei die Zeitdauer der Verbindung der Zuführ- und Abführleitung (14,15) für das Wärmequellenmedium mit einem jeweiligen Wärmeübertrager (10.1, 10.2, 10.3) voreingestellt wird oder in Abhängigkeit vom Druck und/oder der Temperatur des Arbeitsmediums in dem Wärmeübertrager (10.1, 10.2, 10.3) gesteuert wird, der von den Wärmeübertragern (10.1, 10.2, 10.3) der Anordnung das höchste Druck- bzw. Temperaturniveau des Arbeitsmediums hat.

14. Verfahren zum Verdampfen eines Arbeitsmediums gemäß einem der Ansprüche 10 bis 13, wobei in einer Einleitungsphase die Einleitung des Arbeitsmediums in den Arbeitsmediumraum des Wärmeübertragers (10.1,10.2,10.3) erfolgt, der von den Wärmeübertragern (10.1,10.2,10.3) das niedrigste Druck- bzw. Temperaturniveau des Arbeitsmediums aufweist, und in einer Ausleitungsphase die Ausleitung des Arbeitsmediums aus dem Arbeitsmediumraum des Wärmeübertragers (10.1,10.2,10.3) erfolgt, der von den Wärmeübertragern (10.1,10.2,10.3) das höchste Druck- bzw. Temperaturniveau des Arbeitsmediums aufweist, und dass die Zeitspanne der Einleitungsphase und die Zeitspanne der Ausleitungsphase im wesentlichen gleich lang sind, und die Weiterschaltung der Einleitungs- und Ausleitungsphasen zwischen den Wärmeübertragern (10.1,10.2,10.3) der Anordnung synchron und sequentiell erfolgt.

15. Verfahren zum Verdampfen eines Arbeitsmediums gemäß Anspruch 14, wobei die Anordnung mindestens drei Wärmeübertrager (10.1,10.2,10.3) aufweist und bei dem/den Wärmeübertrager(n) (10.1,10.2,10.3), der/die nicht das höchste bzw. das niedrigste Druck- bzw. Temperaturniveau des Arbeitsmediums aufweist/aufweisen, das Arbeitsmedium während der Einleitungs- und Ausleitungsphase der anderen Wärmeübertrager (10.1, 10.2, 10.3) im Arbeitsmediumraum eingeschlossen bleibt.

16. Verfahren zum Verdampfen eines Arbeitsmediums gemäß Anspruch 15, wobei bei dem/den Wärmeübertrager(n) (10.1,10.2,10.3), der/die nicht das höchste oder das niedrigste Druck- bzw. Temperaturniveau des Arbeitsmediums aufweist/aufweisen, der Wärmequellenmedium-Durchgang nur mit dem Wärmequellenmedium-Durchgang des oder eines der anderen Wärmeübertrager (10.1,10.2,10.3) verbunden wird.

17. Verfahren zum Verdampfen eines Arbeitsmediums gemäß einem der Ansprüche 10 bis 16, wobei das Wärmequellenmedium so durch die Wärmequellenmedium-Durchgänge der Wärmeübertrager (10.1,10.2,10.3) geleitet wird, dass es die Wärmequellenmedium-Durchgänge zumindest teilweise gegen den Einfluß der Schwerkraft durchströmt.

## Claims

1. Arrangement with a plurality of heat exchangers for evaporating a working medium by heat transfer from a heat source medium,
each heat exchanger (10.1, 10.2, 10.3) having a heat source medium passage and a working medium chamber separated therefrom, and the heat source medium passages of the heat exchangers (10.1, 10.2, 10.3) being connected or connectable to one another in series, preferably in a ring arrangement,
a valve means (12.1, 12.2, 12.3) being provided between the heat source medium passages of in each case two serially successive heat exchangers (10.1, 10.2, 10.3), **characterised in that**
a supply line (14) for the heat source medium is provided so as to be selectively connectable to and separable from the input of the heat source medium passage of each of the plurality of heat exchangers (10.1, 10.2, 10.3), and
a discharge line (15) for the heat source medium is provided so as to be selectively connectable to and separable from the output of the heat source medium passage of each of the plurality of heat exchangers (10.1, 10.2, 10.3).

2. Arrangement with a plurality of heat exchangers according to claim 1, wherein switchable valve means (11.1, 11.2, 11.3, 13.1, 13.2, 13.3) are provided to establish or interrupt the selective connections of the supply and discharge lines (14,15) to the heat source medium passages.

3. Arrangement with a plurality of heat exchangers according to either claim 1 or claim 2, wherein the arrangement is designed in such a way that the heat source medium passage of the heat exchanger (10.1, 10.2, 10.3), which has the highest pressure and/or temperature level of the working medium of the heat exchangers (10.1, 10.2, 10.3), is connectable to the supply line (14) for the heat source medium, and in such a way that the heat source medium passage of heat exchanger (10.1, 10.2, 10.3), which has the lowest pressure and/or temperature level of the working medium of the heat exchangers (10.1, 10.2, 10.3) of the arrangement, is connectable to the discharge line (15) for the heat source medium.

4. Arrangement with a plurality of heat exchangers according to any of the preceding claims, wherein the arrangement is designed in such a way that the supply and discharge lines (14, 15) for the heat source medium are sequentially and synchronously connectable with the inputs and outputs of the heat source medium passages of the heat exchangers (10.1, 10.2, 10.3) of the arrangement.

5. Arrangement with a plurality of heat exchangers according to any of the preceding claims, wherein the arrangement is designed in such a way that the time period of the connection of the heat source medium supply and discharge lines (14, 15) to the heat source medium passage of a particular heat exchanger (10.1, 10.2, 10.3) is preset or can be controlled depending on the pressure and/or temperature of the working medium in the heat exchanger (10.1, 10.2, 10.3) which has the highest pressure or temperature level of the working medium of the heat exchangers (10.1, 10.2, 10.3) of the arrangement.

6. Arrangement with a plurality of heat exchangers according to any of the preceding claims, wherein the arrangement is designed in such a way that, in a supply phase, the working medium can be supplied into the working medium chamber of the heat exchanger (10.1, 10.2, 10.3) which has the lowest pressure and/or temperature level of the working medium of the heat exchangers (10.1, 10.2, 10.3) of the arrangement, , and in such a way that, in a discharge phase, the working medium can be discharged from the working medium chamber of the heat exchanger (10.1, 10.2, 10.3) which has the highest pressure and/or temperature level of the working medium of the heat exchangers of the arrangement, and wherein the time period of the supply phase and the time period of the discharge phase are set to be substantially the same length, and the arrangement is further designed in such a way that the further switching of the supply and discharge phases can take place synchronously and sequentially between the heat exchangers (10.1, 10.2, 10.3) of the arrangement.

7. Arrangement with a plurality of heat exchangers according to claim 6, wherein the arrangement has at least three heat exchangers (10.1, 10.2, 10.3) and the arrangement is designed in such a way that the working medium of the heat exchanger(s) (10.1, 10.2, 10.3) which does/do not have the highest or the lowest pressure or temperature level of the working medium remains enclosed in the working medium chamber during the supply and discharge phase of the other heat exchangers (10.1, 10.2, 10.3).

8. Arrangement with a plurality of heat exchangers according to claim 7, wherein the arrangement is designed in such a way that, in the heat exchanger(s) (10.1, 10.2, 10.3) which does/do not have the highest or the lowest pressure or temperature level of the working medium, the heat source medium passage can only be connected to the heat source medium passage of the or one of the other heat exchanger(s) (10.1, 10.2, 10.3).

9. Arrangement with a plurality of heat exchangers according to any of the preceding claims, wherein the heat exchangers (10.1, 10.2, 10.3) of the arrangement are arranged or designed in such a way that the input of the heat source medium passage of each heat exchanger (10.1, 10.2, 10.3) is located at a lower position level than the output of the heat source medium passage of the particular heat exchanger (10.1, 10.2, 10.3).

10. Method for evaporating a working medium by heat transfer from a heat source medium in an arrangement with a plurality of heat exchangers (10.1, 10.2, 10.3), each of which has a heat source medium passage and a working medium chamber separated therefrom and the heat source medium passages of which are connected or connectable to one another in series, preferably in a ring arrangement, comprising the steps:
sequentially connecting a supply line (14) for the heat source medium to the input of the heat source medium passage of a first heat exchanger of the plurality of heat exchangers (10.1, 10.2, 10.3) and sequentially connecting a discharge line (15) for the heat source medium to the output of the heat source medium passage of a second heat exchanger of the plurality of heat exchangers (10.1, 10.2, 10.3), while separating the supply line (14) and the discharge line (15) from the input of the heat source medium passage of the second heat exchanger (10.1, 10.2, 10.3) and from the output of the heat source medium passage of the first heat exchanger (10.1, 10.2, 10.3) and, if present, from the inputs and outputs of the heat source medium passages of further heat exchangers of the plurality of heat exchangers (10.1, 10.2, 10.3) of the arrangement.

11. Method for evaporating a working medium according to claim 10, wherein the supply and discharge lines (14, 15) for the heat source medium are connected and disconnected sequentially and synchronously with the heat source medium passages of the respective heat exchangers (10.1, 10.2, 10.3).

12. Method for evaporating a working medium according to either claim 10 or claim 11, wherein the heat exchanger (10.1, 10.2, 10.3) which has the highest pressure and/or temperature level of the working medium of the heat exchangers (10.1, 10.2, 10.3) is connected to the supply line (14) for the heat source medium, and the heat exchanger (10.1, 10.2, 10.3) which has the lowest pressure and/or temperature level of the working medium of the heat exchangers (10.1, 10.2, 10.3) is connected to the discharge line (15) for the heat source medium.

13. Method for evaporating a working medium according to any of claims 10 to 12, wherein the time period of the connection of the supply and discharge line (14, 15) for the heat source medium to a particular heat exchanger (10.1, 10.2, 10.3) is preset or is controlled depending on the pressure and/or the temperature of the working medium in the heat exchanger (10.1, 10.2, 10.3) which has the highest pressure or temperature level of the working medium of the heat exchangers (10.1, 10.2, 10.3) of the arrangement.

14. Method for evaporating a working medium according to any of the claims 10 to 13, wherein, in a supply phase, the working medium is supplied into the working medium chamber of the heat exchanger (10.1, 10.2, 10.3) which has the lowest pressure or temperature level of the working medium of the heat exchangers (10.1, 10.2, 10.3), and, in a discharge phase, the working medium is discharged from the working medium chamber of the heat exchanger (10.1, 10.2, 10.3) which has the highest pressure or temperature level of the working medium of the heat exchangers (10.1, 10.2, 10.3), and wherein the time period of the supply phase and the time period of the discharge phase are substantially the same length, and the further switching of the supply and discharge phases can take place synchronously and sequentially between the heat exchangers (10.1, 10.2, 10.3) of the arrangement.

15. Method for evaporating a working medium according to claim 14, wherein the arrangement has at least three heat exchangers (10.1, 10.2, 10.3) and, in the heat exchanger(s) (10.1, 10.2, 10.3) which does/do not have the highest or the lowest pressure or temperature level of the working medium, the working medium remains enclosed in the working medium chamber during the supply and discharge phase of the other heat exchangers (10.1, 10.2, 10.3).

16. Method for evaporating a working medium according to claim 15, wherein in the heat exchanger(s) (10.1, 10.2, 10.3) which does/do not have the highest or the lowest pressure or temperature level of the working medium, the heat source medium passage is only connected to the heat source medium passage of the one or of the other heat exchanger(s) (10.1, 10.2, 10.3).

17. Method for evaporating a working medium according to any of claims 10 to 16, wherein the heat source medium is passed through the heat source medium passages of the heat exchangers (10.1, 10.2, 10.3) in such a way that it flows through the heat source medium passages at least partially against the influence of gravity.

## Revendications

1. Agencement de plusieurs échangeurs de chaleur pour l'évaporation d'un fluide de travail par transfert de chaleur d'un fluide de source de chaleur, dans lequel
chaque échangeur de chaleur (10.1, 10.2, 10.3) possède un passage de fluide de source de chaleur et un espace de fluide de travail, qui en est séparé, et les passages de fluide de source de chaleur des échangeurs de chaleur (10.1, 10.2, 10.3) communiquent ou peuvent communiquer entre eux en série, de préférence suivant un agencement annulaire,
entre les passages de fluide de source de chaleur de deux échangeurs de chaleur (10.1, 10.2, 10.3) se succédant en série, est prévu, respectivement, un moyen (12.1, 12.2, 12.3) de vanne,
**caractérisé en ce que**
il est prévu un conduit (14) d'apport du fluide de source de chaleur, de manière à ce qu'il puisse communiquer sélectivement avec l'entrée du passage de fluide de source de chaleur de chacun des plusieurs échangeurs de chaleur (10.1, 10.2, 10.3) et en être séparé,
il est prévu un conduit (15) d'évacuation du fluide de source de chaleur, de manière à ce qu'il puisse communiquer sélectivement avec la sortie du passage de fluide de source de chaleur de chacun des plusieurs échangeurs de chaleur (10.1, 10.2, 10.3) et en être séparé.

2. Agencement de plusieurs échangeurs de chaleur suivant la revendication 1, dans lequel il est prévu des moyens (11.1, 11.2, 11.3, 13.1, 13.2, 13.3) de vanne commutables pour ménager ou interrompre les communications sélectives du conduit (14) d'apport et du conduit (15) d'évacuation avec les passages de fluide de source de chaleur.

3. Agencement de plusieurs échangeurs de chaleur suivant la revendication 1 ou 2, dans lequel l'agencement est conformé de manière à ce que le passage de fluide de source de chaleur de l'échangeur de chaleur (10.1, 10.2, 10.3), qui a, parmi les échangeurs de chaleur (10.1, 10.2, 10.3) de l'agencement, le niveau de pression et/ou de température du fluide de travail le plus haut, puisse communiquer avec le conduit (14) d'apport du fluide de source de chaleur et de manière à ce que le passage du fluide de source de chaleur de l'échangeur de chaleur (10.1, 10.2, 10.3), qui, parmi les échangeurs de chaleur (10.1, 10.2, 10.3) de l'agencement, a le niveau de pression et/ou de température du fluide de travail le plus bas, puisse communiquer avec le conduit (15) d'évacuation du fluide de source de chaleur.

4. Agencement de plusieurs échangeurs de chaleur suivant l'une des revendications précédentes, dans lequel l'agencement est conformé de manière à ce que le conduit (14) d'apport et le conduit (15) d'évacuation du fluide de source de chaleur puissent communiquer séquentiellement et de manière synchrone avec les entrées ou les sorties des passages de fluide de source de chaleur des échangeurs de chaleur (10.1, 10.2, 10.3) de l'agencement.

5. Agencement de plusieurs échangeurs de chaleur suivant l'une des revendications précédentes, dans lequel l'agencement est conformé de manière à ce que la durée de la communication du conduit (14) d'apport et du conduit (15) d'évacuation du fluide de source de chaleur avec le passage du fluide de source de chaleur d'un échangeur de chaleur (10.1, 10.2, 10.3) respectif puisse être réglée à l'avance ou puisse être commandée en fonction de la pression et/ou de la température du fluide de travail dans l'échangeur de chaleur (10.1, 10.2, 10.3), qui a, parmi les échangeurs de chaleur (10.1, 10.2, 10.3) de l'agencement, le niveau de pression ou de température du fluide de travail le plus haut.

6. Agencement de plusieurs échangeurs de chaleur suivant l'une des revendications précédentes, dans lequel l'agencement est conformé de manière à pouvoir, dans une phase d'introduction, effectuer l'introduction du fluide de travail dans l'espace de fluide de travail de l'échangeur de chaleur (10.1, 10.2, 10.3), qui, parmi les échangeurs de chaleur (10.1, 10.2, 10.3) de l'agencement, a le niveau de pression et/ou de température du fluide de travail le plus bas et de manière à pouvoir, dans une phase d'évacuation, effectuer l'évacuation du fluide de travail de l'espace de fluide de travail de l'échangeur de chaleur (10.1, 10.2, 10.3), qui, parmi les échangeurs de chaleur (10.1, 10.2, 10.3) de l'agencement, a le niveau de pression et/ou de température du fluide de travail le plus haut et dans lequel le laps de temps de la phase d'introduction et le laps de temps de la phase d'évacuation sont réglés de manière à avoir sensiblement la même durée et l'agencement est conformé, en outre, de manière à pouvoir continuer à effectuer, en synchronisme et séquentiellement, la commutation des phases d'introduction et d'évacuation entre les échangeurs de chaleur (10.1, 10.2, 10.3) de l'agencement.

7. Agencement de plusieurs échangeurs de chaleur suivant la revendication 6, dans lequel l'agencement a au moins trois échangeurs de chaleur (10.1, 10.2, 10.3) et l'agencement est conformé de manière à ce que le ou les échangeurs de chaleur (10.1, 10.2, 10.3), qui n'a ou n'ont pas le niveau de pression ou de température le plus haut ou le plus bas du fluide de travail, laisse (nt) enfermé le fluide de travail dans l'espace de fluide de travail pendant la phase d'introduction et/ou d'évacuation des autres échangeurs de chaleur (10.1, 10.2, 10.3).

8. Agencement de plusieurs échangeurs de chaleur suivant la revendication 7, dans lequel l'agencement est conformé de manière à ce que pour le ou les échangeurs de chaleur (10.1, 10.2, 10.3), qui n'a/n'ont pas le niveau de pression de température le plus haut ou le plus bas du fluide de travail, le passage de fluide de source de chaleur ne puisse communiquer qu'avec le passage de fluide de source de chaleur du un ou de l'un des autres échangeurs de chaleur (10.1, 10.2, 10.3).

9. Agencement de plusieurs échangeurs de chaleur suivant l'une des revendications précédentes, dans lequel les échangeurs de chaleur (10.1, 10.2, 10.3) de l'agencement sont disposés ou conformés de manière à ce que l'entrée du passage de fluide de source de chaleur de chaque échangeur de chaleur (10.1, 10.2, 10.3) se trouve à un niveau de position plus bas que la sortie du passage de fluide de source de chaleur de l'échangeur de chaleur (10.1, 10.2, 10.3) respectif.

10. Procédé d'évaporation d'un fluide de travail par transfert de chaleur d'un fluide de source de chaleur dans un agencement ayant plusieurs échangeurs de chaleur (10.1, 10.2, 10.3), qui possède chacun un passage de fluide de source de chaleur et un espace de fluide de travail, qui en est séparé et dont les passages de fluide de source de chaleur communiquent ou peuvent communiquer entre eux en série, de préférence suivant un agencement annulaire, comprenant les stades :
mise en communication séquentielle d'un conduit (14) d'apport du fluide de source de chaleur avec l'entrée du passage de fluide de source de chaleur d'un premier échangeur de chaleur parmi les plusieurs échangeurs de chaleur (10.1, 10.2, 10.3) et mise en communication séquentielle d'un conduit (15) d'évacuation du fluide de source de chaleur avec la sortie du passage de fluide de source de chaleur d'un deuxième échangeur de chaleur parmi les plusieurs échangeurs de chaleur (10.1, 10.2, 10.3), tandis que le conduit (14) d'apport et le conduit (15) d'évacuation sont séparés de l'entrée du passage de fluide de source de chaleur du deuxième ou de la sortie du passage de fluide de source de chaleur du premier échangeur de chaleur (10.1, 10.2, 10.3) et, pour autant que ce soit le cas, des entrées et des sorties des passages de fluide de source de chaleur d'autres échangeurs de chaleur parmi les plusieurs échangeurs de chaleur (10.1, 10.2, 10.3) de l'agencement.

11. Procédé d'évaporation d'un fluide de travail suivant la revendication 10, dans lequel on met le conduit (14) d'apport et le conduit (15) d'évacuation du fluide de source de chaleur, séquentiellement et en synchronisme, en communication avec les passages de fluide de source de chaleur des échangeurs de chaleur (10.1, 10.2, 10.3) respectifs et on les en sépare.

12. Procédé d'évaporation d'un fluide de travail suivant la revendication 10 ou 11, dans lequel on met l'échangeur de chaleur (10.1, 10.2, 10.3), qui a, parmi les échangeurs de chaleur (10.1, 10.2, 10.3), le niveau de pression et/ou de température du fluide de travail le plus haut, en communication avec le conduit (14) d'apport du milieu de source de chaleur et on met l'échangeur de chaleur (10.1, 10.2, 10.3), qui, parmi les échangeurs de chaleur (10.1, 10.2, 10.3), a le niveau de pression et/ou de température du fluide de travail le plus bas, en communication avec le conduit (15) d'évacuation du fluide de source de chaleur.

13. Procédé d'évaporation d'un fluide de travail suivant l'une des revendications 10 à 12, dans lequel on règle à l'avance la durée de la mise en communication du conduit (14) d'apport et du conduit (15) d'évacuation du fluide de source de chaleur avec un échangeur de chaleur (10.1, 10.2, 10.3) respectif ou on la commande en fonction de la pression et/ou de la température du fluide de travail dans l'échangeur de chaleur (10.1, 10.2, 10.3), qui a, parmi les échangeurs de chaleur (10.1, 10.2, 10.3) de l'agencement, le niveau de pression ou de température du fluide de travail le plus haut.

14. Procédé d'évaporation d'un fluide de travail suivant l'une des revendications 10 à 13, dans lequel, dans une phase d'introduction, l'introduction du fluide de travail s'effectue dans l'espace de fluide de travail de l'échangeur de chaleur (10.1, 10.2, 10.3), qui, parmi les échangeurs de chaleur (10.1, 10.2, 10.3), a le niveau de pression ou de température du fluide de travail le plus bas, et dans une phase d'évacuation, l'évacuation du fluide de travail s'effectue de l'espace de fluide de travail de l'échangeur de chaleur (10.1, 10.2, 10.3), qui, parmi les échangeurs de chaleur (10.1, 10.2, 10.3), a le niveau de pression ou de température du fluide de travail le plus haut et en ce que la durée de la phase d'introduction et la durée de la phase d'évacuation sont sensiblement égales, et on continue à effectuer la commutation des phases d'introduction et d'évacuation, de manière synchrone et séquentiellement, entre les échangeurs de chaleur (10.1, 10.2, 10.3) du dispositif.

15. Procédé d'évaporation d'un fluide de travail suivant la revendication 14, dans lequel l'agencement a au moins trois échangeurs de chaleur (10.1, 10.2, 10.3) et l'agencement est conformé de manière à ce que le ou les échangeurs de chaleur (10.1, 10.2, 10.3), qui n'a ou n'ont pas le niveau de pression ou de température le plus haut ou le plus bas du fluide de travail, laisse(nt) enfermé le fluide de travail dans l'espace de fluide de travail pendant la phase d'introduction et/ou d'évacuation des autres échangeurs de chaleur (10.1, 10.2, 10.3).

16. Procédé d'évaporation d'un fluide de travail suivant la revendication 15, dans lequel, pour le/les échangeurs de chaleur (10.1, 10.2, 10.3), qui n'a pas/n'ont pas le niveau de pression ou de température le plus haut ou le plus bas du fluide de travail, on met le passage du fluide de source de chaleur en communication seulement avec le passage de fluide de source de chaleur du ou de l'un des autres échangeurs de chaleur (10.1, 10.2, 10.3).

17. Procédé d'évaporation d'un fluide de travail suivant l'une des revendications 10 à 16, dans lequel on envoie le milieu de source de chaleur dans les passages de fluide de source de chaleur des échangeurs de chaleur (10.1, 10.2, 10.3), de manière à ce qu'il passe dans les passages de fluide de source de chaleur, au moins en partie, à l'encontre de l'influence de la force de la gravité.
